(19)

Europäisches
Patentamt
European
Patent Office
Office européen
des brevets

(11) **EP 2 254 334 A1**

(12) **EUROPEAN PATENT APPLICATION**
published in accordance with Art. 153(4) EPC

(43) Date of publication:
**24.11.2010 Bulletin 2010/47**

(21) Application number: **09723368.8**

(22) Date of filing: **03.02.2009**

(51) Int Cl.:
*H04N 7/18* [(2006.01)]       *B60R 1/00* [(2006.01)]
*B60R 11/02* [(2006.01)]       *G06T 1/00* [(2006.01)]
*G06T 17/40* [(2006.01)]

(86) International application number:
**PCT/JP2009/051747**

(87) International publication number:
**WO 2009/116327 (24.09.2009 Gazette 2009/39)**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**AL BA RS**

(30) Priority: **19.03.2008  JP 2008071864**

(71) Applicant: **SANYO Electric Co., Ltd.
Moriguchi-shi
Osaka 570-8677 (JP)**

(72) Inventor: **HONGO, Hitoshi
Moriguchi-Shi
Osaka 570-8677 (JP)**

(74) Representative: **Glawe, Delfs, Moll
Patent- und Rechtsanwälte
Postfach 26 01 62
80058 München (DE)**

(54) **IMAGE PROCESSING DEVICE AND METHOD, DRIVING SUPPORT SYSTEM, AND VEHICLE**

(57)      A driving support system performs a viewpoint conversion, generates, from a camera image obtained from an in-vehicle camera, an extended bird's-eye view image corresponding to a synthesized image of first and second element images, and displays the generated image. The first element image is a bird's-eye view image showing the condition around a vehicle. The second element image is a far image showing the condition far away from the vehicle. The extended bird's-eye view image is obtained by converting the camera image to an image viewed from the viewpoint of a virtual camera. When the first and second element images are generated, the depression angles of the virtual camera are 90 degrees and 90 degrees or less, respectively. When the extended bird's-eye view image is generated corresponding to the tilt angle or the like of an actual camera, it is automatically determined whether the lack of an image occurs or not. In the case where the lack of the image occurs, the position of the boundary between the first and second element images, the height of the viewpoint of the virtual camera, etc., are adjusted so that the lack disappears.

FIG.11

```
            ┌─ STRAT ─┐
                 │
S1    ACQUIRE ORIGINAL
           IMAGE
                 │
S2    CORRECT LENS
        DISTORTION
                 │
S3    READ AUGMENTED
      TRANSFORMATION
        PARAMETERS  ◄──────────────┐
                 │                  │
S4  PERFORM AUGMENTED              │
      BIRD'S-EYE          S6  ADJUST AUGMENTED
     TRANSFORMATION           TRANSFORMATION
                 │            PARAMETERS:
                 │             ·ANGLE
S5      IS          Y           VARIATION RATE,
     THERE IMAGE ──────►       ·POSITION OF      ADJUST
       LOSS?                    BOUNDARY LINE,
                 │ N            AND/OR
                 │             ·HEIGHT OF VIRTUAL
S7     DISPLAY                  CAMERA
                 │
              ┌─ END ─┐
```

EP 2 254 334 A1

## Description

### Technical Field

The present invention relates to an image processing device and an image processing method for applying image processing on an input image from a camera. The invention also relates to a driving support system and a vehicle employing those.

### Background Art

A space behind a vehicle tends to be a blind spot to the driver of the vehicle. There has thus been proposed a technique of fitting a vehicle with a camera for monitoring a region tending to be a blind spot to the driver so that an image obtained from the camera is displayed on a display device arranged near the driver's seat. Seeing that displaying an unprocessed image obtained from a camera makes it difficult to grasp perspective, there has also been developed a technology of displaying an image obtained from a camera after transforming it into a bird's-eye-view image.

A bird's-eye-view image is an image showing a vehicle as if viewed down from the sky, and thus makes it easy to grasp perspective; inherently, however, a bird's-eye-view image has a narrow viewing field. In view of this, there has been proposed a technology of displaying a bird's-eye-view image in a first image region corresponding to an area close to a vehicle and simultaneously displaying a far-field image in a second image region corresponding to an area far from the vehicle (see, for example, Patent Document 1 listed below).

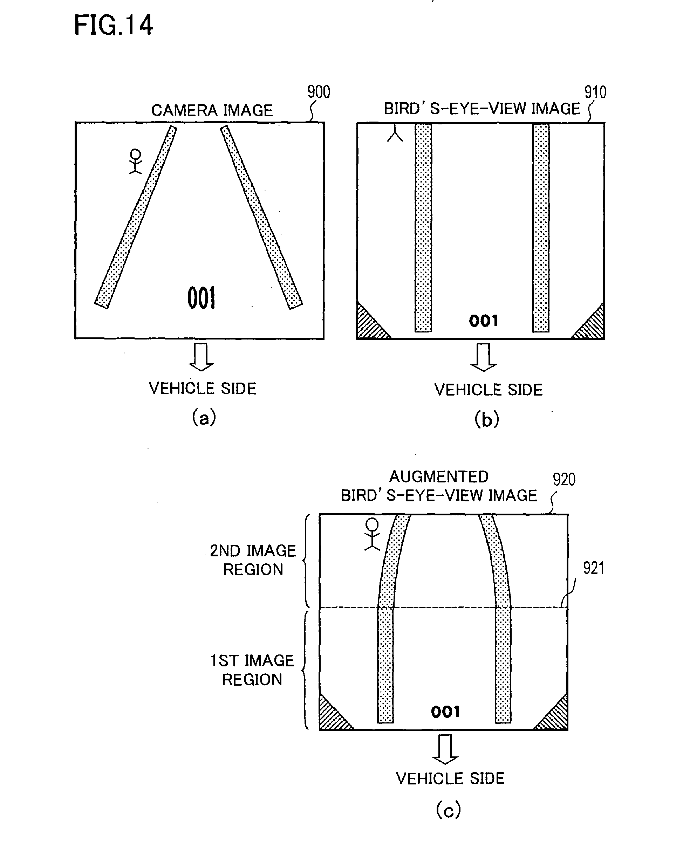

An image corresponding to a joined image of a bird's-eye-view image in the first image region and a far-field image in the second image region is also called an augmented bird's-eye-view image. The image 900 shown in Fig. 14 (a) is an example of a camera image obtained from a camera. Figs. 14(b) and (c) show a bird's-eye-view image 910 and an augmented bird's-eye-view image 920 obtained from the camera image 900. The camera image 900 is obtained by shooting two parallel white lines drawn on a road surface. By the side of one of the white lines, a person as a subject is located. The depression angle of the camera fitted on the vehicle is not equal to 90 degrees, and thus, on the camera image 900, the two white lines do not appear parallel; on the bird's-eye-view image 910, by contrast, the two white lines appear parallel as they actually are in the real space. In Figs. 14(b) and (c), hatched areas represent regions that are not shot by the camera (regions for which no image information is obtained). The bottom-end side of Figs. 14(a) to (c) corresponds to the side where the vehicle is located.

In the augmented bird's-eye-view image 920, a boundary line 921 is set. In the first image region, which is located below the boundary line 921, a bird's-eye-view image is shown which is obtained from a first partial image of the camera image and which shows the situation close to the vehicle, and in the second image region, which is located above the boundary line 921, a far-field image is shown which is obtained from a second partial image of the camera image and which shows the situation far from the vehicle.

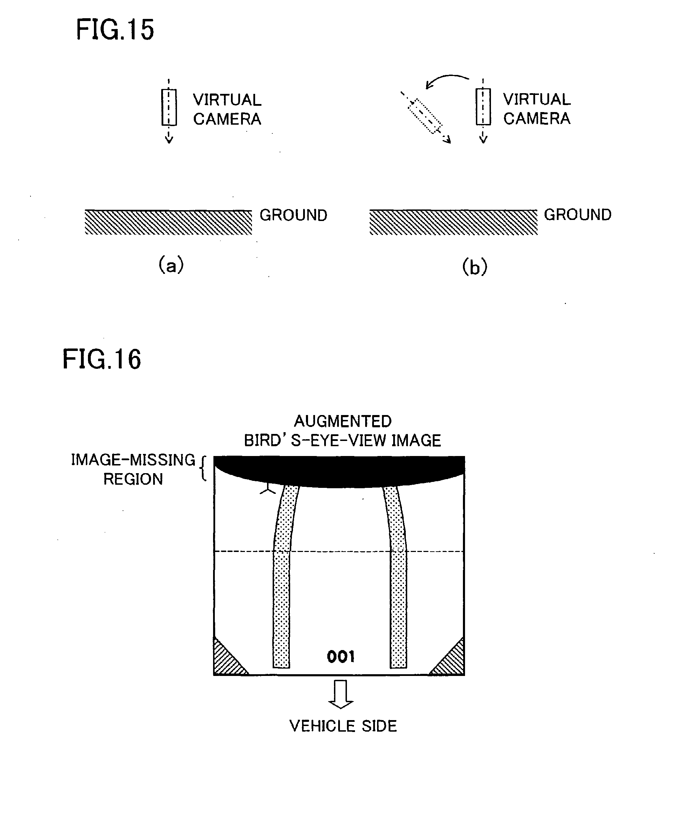

The augmented bird's-eye-view image 920 corresponds to a result of transforming, through viewpoint transformation, the camera image 900 into an image as viewed from the viewpoint of a virtual camera. Here, as shown in Fig. 15(a), the depression angle of the virtual camera at the time of generating the bird's-eye-view image in the first image region is fixed at 90 degrees. On the other hand, as shown in Fig. 15(b), the depression angle of the virtual camera at the time of generating the far-field image in the second image region is below 90 degrees; specifically, the depression angle is varied at a predetermined angle variation rate such that, as one goes up the image, the depression angle, starting at 90 degrees, gradually approaches the actual depression angle of the camera (e.g., 45 degrees).

Because of the narrow viewing field, only a small part of the person as the subject appears on the bird's-eye-view image 910 (only the legs appear on the bird's-eye-view image 910); on the augmented bird's-eye-view image 920, by contrast, about as much of the same person as in the camera image 900 appears. By displaying an augmented bird's-eye-view image like the one just described, it is possible, while enjoying the advantage of easy grasp of perspective thanks to a bird's-eye-view image, to assist in the viewing field far from the vehicle. That is, it is possible to obtain excellent viewability over a wide area.

Patent Document 1: JP-A-2006-287892.

### Disclosure of the Invention

### Problems to be Solved by the Invention

In a driving support system capable of generating an augmented bird's-eye-view image, image transformation parameters for generating an augmented bird's-eye-view image from a camera image are set beforehand so that, in actual operation, an augmented bird's-eye-view image is generated by use of those image transformation parameters. The image transformation parameters are parameters that define the correspondence between coordinates on the coordinate plane on which the camera image is defined and coordinates on the coordinate plane on which the augmented bird's-eye-view image is defined. To generate an augmented bird's-eye-view image, information is necessary such as the inclination angle, fitting height, etc. of an actual camera, and the image transformation parameters are set based on that information.

In a case where it is previously known that the inclination angle and fitting height of a camera will remain completely fixed, as in a case where a camera is fitted at the stage of manufacture of a vehicle, by setting proper image transformation parameters based on the above information beforehand and keeping using them unchanged, it is possible to always generate a proper augmented bird's-eye-view image.

In contrast, in a case where a user prepares a camera separately from a vehicle and fits the camera on the vehicle to suit the shape etc. of the vehicle, the inclination angle etc. of the camera do not remain constant, and accordingly the image transformation parameters need to be adjusted properly to cope with variations in the inclination angle etc. of the camera. Using improper image transformation parameters may cause (at least partial) image loss in the generated augmented bird's-eye-view image. Fig. 16 shows an augmented bird's-eye-view image suffering such image loss.

Image loss means that, within the entire region of an augmented bird's-eye-view image over which the entire augmented bird's-eye-view image is supposed to appear, an image-missing region is present. An image-missing region denotes a region where no image data based on the image data of a camera image is available. The solid black area in a top part of Fig. 16 is an image-missing region. Ideally, the image data of all the pixels of an augmented bird's-eye-view image should be generated from the image data of a camera image obtained by shooting by a camera; with improper image transformation parameters, however, part of the pixels in the augmented bird's-eye-view image have no corresponding pixels in the camera image, and this results in image loss.

Needless to say, in a system that displays an augmented bird's-eye-view image, image loss should be eliminated or minimized.

Against the background described above, it is an object of the present invention to provide an image processing device and an image correction method that suppress image loss in a transformed image obtained through coordinate transformation of an image from a camera. It is another object of the invention to provide a driving support system and a vehicle that employ them.

**Means for Solving the Problem**

According to the invention, an image processing device includes: an image acquisition portion which acquires an input image based on the result of shooting by a camera shooting the surroundings of a vehicle; an image transformation portion which transforms, through coordinate transformation, the input image into a transformed image including a first constituent image as viewed from a first virtual camera and a second constituent image as viewed from a second virtual camera different from the first virtual camera; a parameter storage portion which stores an image transformation parameter for transforming the input image into the transformed image; a loss detection portion which checks, by use of the image transformation parameter stored in the parameter storage portion, whether or not, within the entire region of the transformed image obtained from the input image, an image-missing region is present where no image data based on the image data of the input image is available; and a parameter adjustment portion which, if the image-missing region is judged to be present within the entire region of the transformed image, adjusts the image transformation parameter so as to suppress the presence of the image-missing region.

This makes it possible to generate a transformed image in which image loss is suppressed.

Specifically, for example, according to the image transformation parameter, the image transformation portion generates the transformed image by dividing the input image into a plurality of partial images including a first partial image in which a subject at a comparatively short distance from the vehicle appears and a second partial image in which a subject at a comparatively long distance from the vehicle appears and then transforming the first and second partial images into the first ad second constituent images respectively.

Moreover, for example, the image transformation parameter before and after the adjustment is set such that the depression angle of the second virtual camera is smaller than the depression angle of the first virtual camera and that the depression angle of the second virtual camera decreases at a prescribed angle variation rate away from the first constituent image starting at the boundary line between the first and second constituent images, and, if the image-missing region is judged to be present within the entire region of the transformed image, the parameter adjustment portion adjusts the image transformation parameter by adjusting the angle variation rate in a direction in which the size of the image-missing region decreases.

As described above, the image transformation parameter depends on the angle variation rate, and adjusting the angle variation rate causes the viewing field of the transformed image to vary. Accordingly, by adjusting the angle variation rate, it is possible to suppress the presence of an image-missing region.

For another example, the image transformation parameter before and after the adjustment is set such that the depression angle of the second virtual camera is smaller than the depression angle of the first virtual camera, and, if the image-missing region is judged to be present within the entire region of the transformed image, the parameter adjustment portion adjusts the image transformation parameter by moving the boundary line between the first and second constituent images within the transformed image in a direction in which the size of the image-missing region decreases.

Since the depression angle of the second virtual camera is smaller than the depression angle of the first virtual camera, for example, moving the boundary line within the transformed image in a direction in which the image size of the second constituent image diminishes causes the viewing field of the transformed image to diminish. Accordingly, by adjusting the position of the boundary line, it is possible to suppress the presence of an image-missing region.

For another example, if the image-missing region is judged to be present within the entire region of the transformed image, the parameter adjustment portion adjusts the image transformation parameter by adjusting the height of the first and second virtual cameras in a direction in which the size of the image-missing region decreases.

The transformed image is a result of transforming the input image into an image as viewed from the viewpoints of the virtual cameras. Thus, for example, reducing the height of the virtual cameras causes the viewing field of the transformed image to diminish. Accordingly, by adjusting the height of the virtual cameras, it is possible to suppress the presence of an image-missing region.

For another example, the image transformation parameter before and after adjustment is set such that the depression angle of the second virtual camera is smaller than the depression angle of the first virtual camera and that the depression angle of the second virtual camera decreases at a prescribed angle variation rate away from the first constituent image starting at the boundary line between the first and second constituent images, and, if the image-missing region is judged to be present within the entire region of the transformed image, the parameter adjustment portion, taking the angle variation rate, the position of the boundary line on the transformed image, and the height of the first and second virtual cameras as a first, a second, and a third adjustment target respectively, adjusts the image transformation parameter by adjusting one or more of the first to third adjustment targets in a direction in which the size of the image-missing region decreases; the parameter adjustment portion repeats the adjustment of the image transformation parameter until the entire region of the transformed image does not include the image-missing region.

Moreover, for example, the image transformation parameter defines coordinates before coordinate transformation corresponding to the coordinates of individual pixels within the transformed image; when the coordinates before coordinate transformation are all coordinates within the input image, the loss detection portion judges that no image-missing region is present within the entire region of the transformed image and, when the coordinates before coordinate transformation include coordinates outside the input image, the loss detection portion judges that the image-missing region is present within the entire region of the transformed image.

According to the invention, a driving support system includes a camera and an image processing device as described above, and an image based on the transformed image obtained at the image transformation portion of the image processing device is outputted to a display device.

According to the invention, a vehicle includes a camera and an image processing device as described above.

According to the invention, an image processing method includes: an image acquiring step of acquiring an input image based on the result of shooting by a camera shooting the surroundings of a vehicle; an image transforming step of transforming, through coordinate transformation, the input image into a transformed image including a first constituent image as viewed from a first virtual camera and a second constituent image as viewed from a second virtual camera different from the first virtual camera; a parameter storing step of storing an image transformation parameter for transforming the input image into the transformed image; a loss detecting step of checking, by use of the stored image transformation parameter, whether or not, within the entire region of the transformed image obtained from the input image, an image-missing region is present where no image data based on the image data of the input image is available; and a parameter adjusting step of adjusting, if the image-missing region is judged to be present within the entire region of the transformed image, the image transformation parameter so as to suppress presence of the image-missing region.

## Advantages of the Invention

According to the invention, it is possible to provide an image processing device and an image correction method that suppress image loss in a transformed image obtained through coordinate transformation of an image from a camera. It is also possible to provide a driving support system and a vehicle that employ them.

The significance and benefits of the invention will be clear from the following description of its embodiment. It should however be understood that the embodiment is merely an example of how the invention is implemented, and that the meanings of the terms used to describe the invention and its features are not limited to the specific ones in which they are used in the following description of the embodiments.

## Brief Description of Drawings

**EP 2 254 334 A1**

[Fig. 1] is an outline configuration block diagram of a driving support system embodying the invention.

[Fig. 2] is an exterior side view of a vehicle to which the driving support system of Fig. 1 is applied.

[Fig. 3] is a diagram showing the relationship between the depression angle of a camera and the ground (horizontal plane).

[Fig. 4] is a diagram showing the relationship between the optical center of a camera an the camera coordinate plane on which a camera image is defined.

[Fig. 5] is a diagram showing the relationship between a camera coordinate plane and a bird's-eye-view coordinate plane.

[Fig. 6](a) is a diagram showing a camera image obtained from the camera in Fig. 1, and (b) is a diagram showing a bird's-eye-view image based on that camera image. [Fig. 7] is a diagram showing the makeup of an augmented bird's-eye-view image generated by the image processing device in Fig. 1.

[Fig. 8] is a diagram showing the relationship between a camera image and an augmented bird's-eye-view image.

[Fig. 9] is a diagram showing an augmented bird's-eye-view image obtained from the camera image in Fig. 6(a).

[Fig. 10] is a detailed block diagram of the driving support system of Fig. 1, including a functional block diagram of the image processing device.

[Fig. 11] is a flow chart showing the flow of operation of the driving support system of Fig. 1.

[Fig. 12] is a diagram showing the contour of an augmented bird's-eye-view image defined on a bird's-eye-view coordinate plane in the image processing device in Fig. 10.

[Fig. 13](a) is a diagram showing the relationship between a camera image and an augmented bird's-eye-view image when there is no image loss, and (b) is a diagram showing the relationship between a camera image and an augmented bird's-eye-view image when there is image loss.

[Fig. 14] (a), (b), and (c) are diagrams showing a camera image, a bird's-eye-view image, and an augmented bird's-eye-view image according to a conventional technology.

[Fig. 15](a) and (b) are conceptual diagrams of virtual cameras assumed in generating an augmented bird's-eye-view image.

[Fig. 16] is a diagram showing an example of an augmented bird's-eye-view image suffering image loss.

## List of Reference Symbols

1  Camera
2  Image processing device
3  Display device
11  Image input portion
12  Lens distortion correction portion
13  Image transformation portion
14  Loss detection portion
15  Parameter adjustment portion
16  Parameter storage portion
17  Display image generation portion

## Best Mode for Carrying Out the Invention

An embodiment of the present invention will be described specifically below with reference to the accompanying drawings. Among the different drawings referred to in the course, the same parts are identified by the same reference signs, and in principle no overlapping description of the same parts will be repeated.

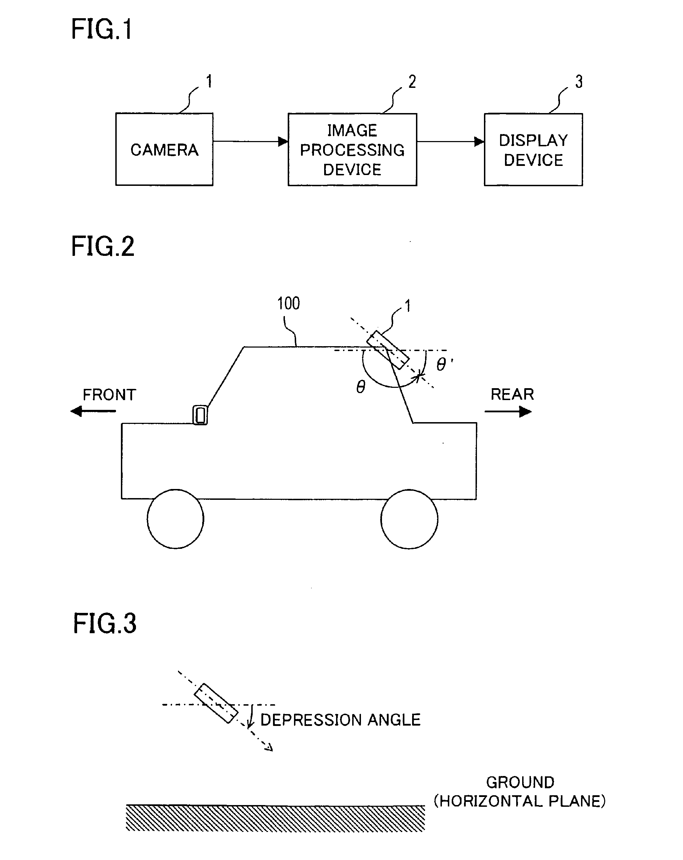

Fig. 1 is an outline configuration block diagram of a driving support system embodying the invention. The driving support system in Fig. 1 includes a camera 1, an image processing device 2, and a display device 3. The camera 1 performs shooting, and feeds the image processing device 2 with a signal representing the image obtained by the shooting. The image processing device 2 generates an image for display (called the display image) from the image obtained from the camera 1. The image processing device 2 outputs a video signal representing the display image thus generated to the display device 3, and the display device 3 displays the display image in the form of video based on the video signal fed to it.

The image obtained by the shooting by the camera 1 is called the camera image. The camera image as it is represented by the unprocessed output signal from the camera 1 is often under the influence of lens distortion. Accordingly, the image processing device 2 applies lens distortion correction on the camera image as it is represented by the unprocessed output signal from the camera 1, and generates the display image based on the camera image having undergone the lens distortion correction. In the following description, unless otherwise stated, a camera image denotes one having undergone lens distortion correction. Depending on the characteristics of the camera 1, however, processing for lens distortion correction may be omitted.

Fig. 2 is an exterior side view of a vehicle 100 to which the driving support system in Fig. 1 is applied. As shown in Fig. 2, in a rear part of the vehicle 100, the camera 1 is arranged to point obliquely rearward-downward. The vehicle 100 is, for example, an automobile. With the horizontal plane, the optical axis of the camera 1 forms, as shown in Fig. 2, an angle represented by $\theta$ and an angle represented by $\theta'$. With respect to a camera as an observer, the acute angle that the optical axis of the camera forms with the horizontal plane is generally called the depression angle (or dip). The angle $\theta'$ is the depression angle of the camera 1. Now, take the angle $\theta$ as the inclination angle of the camera 1 with respect to the horizontal plane. Then, $90° < \theta < 180°$ and simultaneously $\theta + \theta' = 180°$.

The camera 1 shoots the surroundings of the vehicle 100. The camera 1 is fitted on the vehicle 100 so as to have a viewing field in the rear direction of (behind) the vehicle 100 in particular. The viewing field of the camera 1 includes the road surface located behind the vehicle 100. In the following description, it is assumed that the ground lies on the horizontal plane, and that a "height" denotes a height relative to the ground. Moreover, in the embodiment under discussion, the ground and the road surface are synonymous.

Used as the camera 1 is a camera employing a solid-state image sensor, such as a CCD (charge-coupled device) or CMOS (complementary metal oxide semiconductor) image sensor. The image processing device 2 is, for example, built as an integrated circuit. The display device 3 is, for example, built around a liquid crystal display panel. A display device included in a car navigation system or the like may be shared as the display device 3 in the driving support system. The image processing device 2 may be incorporated into, as part of, a car navigation system. The image processing device 2 and the display device 3 are fitted, for example, near the driver's seat in the vehicle 100.

[Ordinary Bird's-Eye-View Image]

The image processing device 2 can generate a bird's-eye-view image by transforming, through coordinate transformation, the camera image into an image as viewed from the viewpoint of a virtual camera. The coordinate transformation for generating a bird's-eye-view image from the camera image is called "bird's-eye transformation." The image processing device 2 can also generate an augmented bird's-eye-view image as discussed in JP-A-2006-287892; before a description of that, as a basis for that, bird's-eye transformation will be described first.

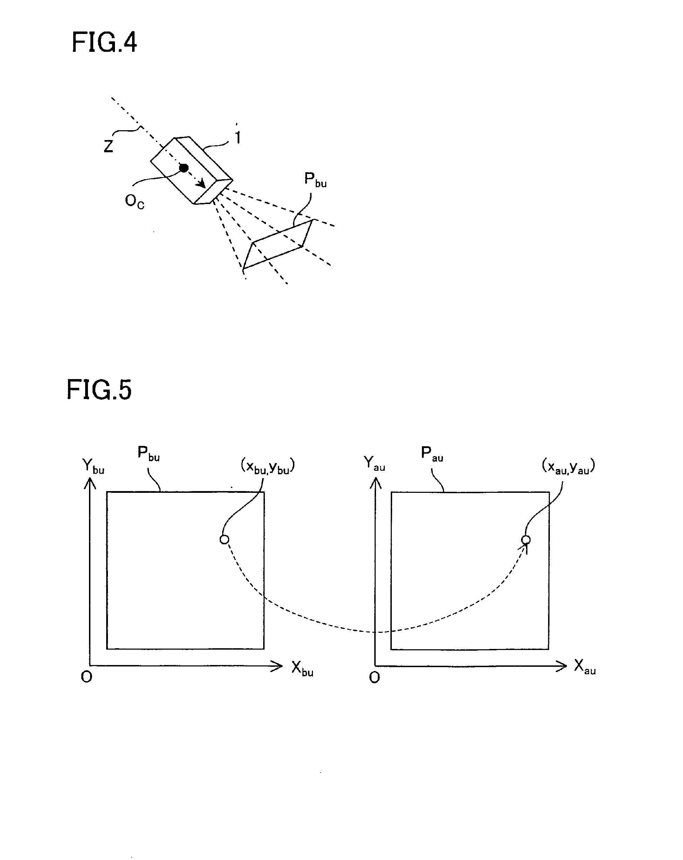

Refer to Figs. 4 and 5. Take a plane perpendicular to the optical axis direction of the camera 1 as the camera coordinate plane. In Figs. 4 and 5, the camera coordinate plane is represented by plane $P_{bu}$. The camera coordinate plane is a plane that is parallel to the image sensing surface of the solid-state image sensor of the camera 1 and onto which the camera image is projected; the camera image is formed by pixels arrayed two dimensionally on the camera coordinate plane. The optical center of the camera 1 is represented by $O_C$, and the axis passing through the optical center $O_C$ and parallel to the optical axis direction of the camera 1 is taken as Z axis. The intersection between Z axis and the camera coordinate plane is the center point of the camera image. Two mutually perpendicular axes on the camera coordinate plane are taken as $X_{bu}$ and $Y_{bu}$ axes. $X_{bu}$ and $Y_{bu}$ axes are parallel to the horizontal and vertical directions, respectively, of the camera image. The position of a given pixel on the camera coordinate plane (and hence the camera image) is represented by coordinates $(x_{bu}, y_{bu})$. The symbols $x_{bu}$ and $y_{bu}$ represent the horizontal and vertical positions, respectively, of that pixel on the camera coordinate plane (and hence the camera image). The origin of the two-dimensional orthogonal coordinate plane including the camera coordinate plane is represented by O. The vertical direction on the camera image corresponds to the direction of distance from the vehicle 100; thus, the greater the $Y_{bu}$-axis component (i.e., $y_{bu}$) of a given pixel on the camera coordinate plane, the greater the distance of that pixel from the vehicle 100 and the camera 1 as observed on the camera coordinate plane.

On the other hand, a plane parallel to the ground is taken as the bird's-eye-view coordinate plane. In Fig. 5, the bird's-eye-view coordinate plane is represented by plane $P_{au}$. The bird's-eye-view image is formed by pixels arrayed two-dimensionally on the bird's-eye-view coordinate plane. The orthogonal coordinate axes on the bird's-eye-view coordinate plane are taken as $X_{au}$ and $Y_{au}$ axes. $X_{au}$ and $Y_{au}$ axes are parallel to the horizontal and vertical directions, respectively of the bird's-eye-view image. The position of a given pixel on the bird's-eye-view coordinate plane (and hence the bird's-eye-view image) are represented by coordinates $(x_{au}, y_{au})$. The symbols $x_{au}$ and $y_{au}$ represent the horizontal and vertical positions, respectively, of that pixel on the bird's-eye-view coordinate plane (and hence the bird's-eye-view image). The vertical direction on the bird's-eye-view image corresponds to the direction of distance from the vehicle 100; thus, the greater the $Y_{au}$-axis component (i.e., $y_{au}$) of a given pixel on the bird's-eye-view coordinate plane, the greater the distance of that pixel from the vehicle 100 and the camera 1 as observed on the bird's-eye-view coordinate plane.

The bird's-eye-view image corresponds to an image obtained by projecting the camera image, which is defined on the camera coordinate plane, onto the bird's-eye-view coordinate plane, and the bird's-eye transformation for performing that projection can be achieved through well-known coordinate transformation. For example, in a case where a perspective projection transform is used, a bird's-eye-view image can be generated by transforming the coordinates $(x_{bu}, y_{bu})$ of individual pixels on the camera image into coordinates $(x_{au}, y_{au})$ on the bird's-eye-view image according to Equation (1) below. Here, f represents the focal length of the camera 1; h represents the height (fitting height) at which the camera 1 is arranged, that is, the height of the viewpoint of the camera 1; H represents the height at which the virtual camera mentioned above is arranged, that is, the height of the viewpoint of the virtual camera.

[Equation 1]

$$\begin{pmatrix} x_{au} \\ y_{au} \end{pmatrix} = \begin{pmatrix} \dfrac{x_{bu}(fh\sin\theta + Hy_{au}\cos\theta)}{fH} \\ \dfrac{fh(f\cos\theta - y_{bu}\sin\theta)}{H(f\sin\theta + y_{bu}\cos\theta)} \end{pmatrix} \tag{1}$$

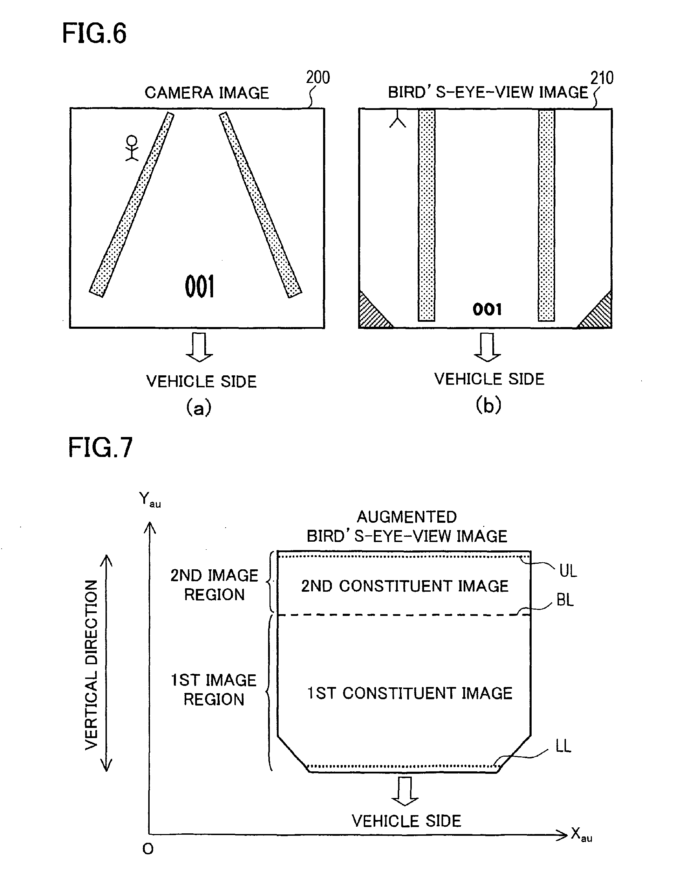

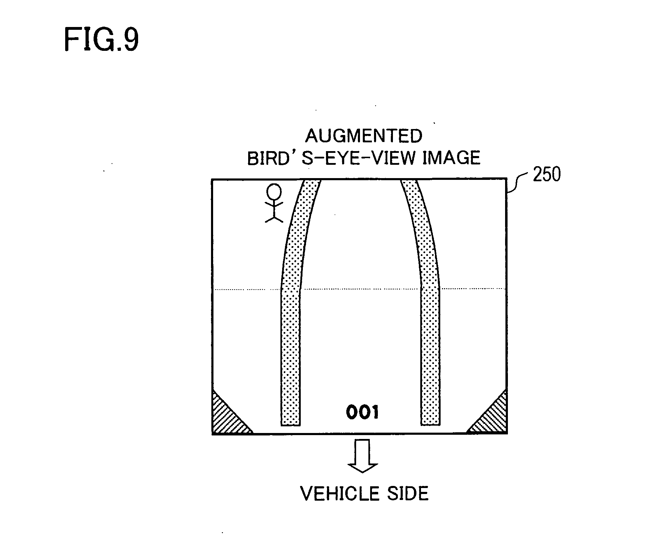

Fig. 6(a) shows an example of a camera image 200, and Fig. 6(b) shows a bird's-eye-view image 210 obtained by subjecting the camera image to bird's-eye transformation. The camera image 200 is obtained by shooting two parallel white lines drawn on a road surface. By the side of one of the white lines, a person as a subject is located. The depression angle of the camera 1 is not equal to 90 degrees, and thus, on the camera image 200, the two white lines do not appear parallel; on the bird's-eye-view image 210, by contrast, the two white lines appear parallel as they actually are in the real space. In Fig. 6(b), and in Fig. 9 referred to later, hatched areas represent regions that are not shot by the camera 1 (regions for which no image information is obtained). While the entire region of the camera image has a rectangular contour (outer shape), the entire region of the bird's-eye-view image, because of its nature, does not always have a rectangular contour.

[Augmented Bird's-Eye-View Image]

The bird's-eye-view image discussed above is a result of transforming the camera image into an image as viewed from the viewpoint of the virtual camera, and the depression angle of the virtual camera at the time of generating a bird's-eye-view image is 90 degrees. That is, the virtual camera then is one that looks down at the ground in the plumb-line direction. Displaying a bird's-eye-view image allows a driver an easy grasp of the sense of distance (in other words, perspective) between a vehicle's body and an object; inherently, however, a bird's-eye-view image has a narrow viewing field. This is taken into consideration in an augmented bird's-eye-view image, which the image processing device 2 can generate.

Fig. 7 shows the makeup of an augmented bird's-eye-view image. The entire region of the augmented bird's-eye-view image is divided, with a boundary line BL as a boundary, into a first and a second image region. The image in the first image region is called the first constituent image, and the image in the second image region is called the second constituent image. The bottom-end side of Fig. 7 corresponds to the side where the vehicle 100 is located. Thus, in the first constituent image appears a subject at a comparatively short distance from the vehicle 100, and in the second constituent image appears a subject at a comparatively long distance from the camera 100. That is, a subject appearing in the first constituent image is located closer to the vehicle 100 and the camera 1 than is a subject appearing in the second constituent image.

The up/down direction of Fig. 7 coincides with the vertical direction of the augmented bird's-eye-view image, and the boundary line BL is parallel to the horizontal direction of, and horizontal lines in, the augmented bird's-eye-view image. Of horizontal lines in the first constituent image, the horizontal line located closest to the vehicle 100 is called the bottom-end line LL. Of horizontal lines in the second constituent image, the horizontal line at the longest distance from the boundary line BL is called the top-end line UL. With respect to points on the augmented bird's-eye-view image, as one goes from the bottom-end line LL to the top-end line UL, the distance of the points from the vehicle 100 and the camera 1 as observed on the augmented bird's-eye-view image increases.

It is assumed that, like a bird's-eye-view image, an augmented bird's-eye-view image is an image on the bird's-eye-view coordinate plane. In the following description, unless otherwise stated, the bird's-eye-view coordinate plane is to be understood as denoting the coordinate plane on which an augmented bird's-eye-view image is defined. Accordingly, the position of a given pixel on the bird's-eye-view coordinate plane (and hence the augmented bird's-eye-view image) is represented by coordinates $(x_{au}, y_{au})$, and the symbols $x_{au}$ and $y_{au}$ represent the horizontal and vertical positions, respectively, of that pixel on the bird's-eye-view coordinate plane (and hence the augmented bird's-eye-view image). $X_{au}$ and $Y_{au}$ axes are parallel to the horizontal and vertical directions, respectively, of the augmented bird's-eye-view image. The vertical direction of the augmented bird's-eye-view image corresponds to the direction of distance from the vehicle. 100; thus, the greater the $Y_{au}$-axis component (i.e., $y_{au}$) of a given pixel on the bird's-eye-view coordinate plane, the greater the distance of that pixel from the vehicle 100 and the camera 1 as observed on the bird's-eye-view coordinate plane. Of horizontal lines in the augmented bird's-eye-view image, the horizontal line with the smallest $Y_{au}$-axis component corresponds to the bottom-end line LL, and the horizontal line with the greatest $Y_{au}$-axis component corresponds to the top-end line UL.

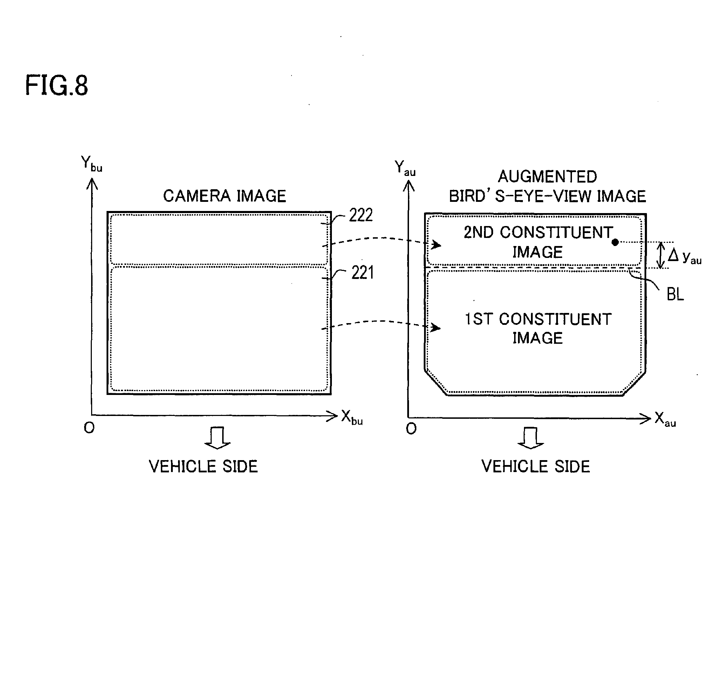

Now, with reference to Fig. 8, the concept of how an augmented bird's-eye-view image is generated from the camera image will be described. Consider a case where the camera image is divided into a partial image 221 in a region with comparatively small $Y_{bu}$ components (an image region close to the vehicle) and a partial image 222 in a region with comparatively great $Y_{bu}$ components (an image region far from the vehicle). In this case, the first constituent image is generated from the image data of the partial image 221, and the second constituent image is generated from the image data of the partial image 222.

The first constituent image is obtained by applying the bird's-eye transformation described above to the partial image 221. Specifically, the coordinates $(x_{bu}, y_{bu})$ of individual pixels in the partial image 221 are transformed into coordinates $(x_{au}, y_{au})$ on a bird's-eye-view image according to Equations (2) and (3) below, and the image formed by pixels having the coordinates thus having undergone the coordinate transformation is taken as the first constituent image. Equation (2) is a rearrangement of Equation (1) with $\theta_A$ substituted for $\theta$ in Equation (1). As will be understood from Equation (3), in generating the first constituent image, used as $\theta_A$ in Equation (2) is the inclination angle $\theta$ of the actual camera 1.

[Equation 2]

$$\begin{pmatrix} x_{au} \\ y_{au} \end{pmatrix} = \begin{pmatrix} \dfrac{x_{bu}(fh\sin\theta_A + Hy_{au}\cos\theta_A)}{fH} \\ \dfrac{fh(f\cos\theta_A - y_{bu}\sin\theta_A)}{H(f\sin\theta_A + y_{bu}\cos\theta_A)} \end{pmatrix} \quad (2)$$

[Equation 3]

$$\theta_A = \theta \quad (3)$$

On the other hand, the coordinates $(x_{bu}, y_{bu})$ of individual pixels in the partial image 222 are transformed into coordinates $(x_{au}, y_{au})$ on the bird's-eye-view image according to Equations (2) and (4), and the image formed by pixels having the coordinates thus having undergone the coordinate transformation is taken as the second constituent image. That is, in generating the second constituent image, used as $\theta_A$ in Equation (2) is a $\theta_A$ fulfilling Equation (4). Here, $\Delta y_{au}$ represents the distance of a pixel of interest in the second constituent image from the boundary line BL as observed on the bird's-eye-view image. As the difference between the $Y_{au}$-axis component (i.e., $y_{au}$) of the coordinates of the pixel of interest and the $Y_{au}$-axis component of the coordinates of the boundary line BL increases, $\Delta y_{au}$ increases. $\Delta\theta$ represents the angle variation rate, which has a positive value. The value of $\Delta\theta$ can be set beforehand. It is here assumed that $\Delta\theta$ is so set that the angle $\theta_A$ always remains 90 degrees or more. In a case where Equation (4) is followed, each time one line worth of the image above the boundary line BL is generated, the angle $\theta_A$ used for coordinate transformation smoothly decreases toward 90 degrees; alternatively, the angle $\theta_A$ may be varied each time a plurality of lines worth of image is generated.

[Equation 4]

$$\theta_A = \theta - \Delta y_{au} \times \Delta\theta \quad (4)$$

Coordinate transformation, like that described above, for generating an augmented bird's-eye-view image from a camera image is called "augmented bird's-eye transformation." As an example, Fig. 9 shows an augmented bird's-eye-view image 250 generated from the camera image 200 in Fig. 6(a). Of the augmented bird's-eye-view image 250, the part corresponding to the first constituent image is an image showing the ground as if viewed from above in the plumb-line direction, and the part corresponding to the second constituent image is an image showing the ground as if viewed from above from an oblique direction.

Because of the narrow viewing field, only a small part of the person as a subject appears on the bird's-eye-view image 210 in Fig. 6(b) (only the legs appear on the bird's-eye-view image 210); on the augmented bird's-eye-view image 250 in Fig. 9, by contrast, about as much of the same person as in the camera image 200 in Fig. 6(a) appears. By displaying an augmented bird's-eye-view image like this, it is possible to view a comparatively far area in the form of video.

The first constituent image is a result of transforming, through viewpoint transformation, the partial image 221 as viewed from the viewpoint of the actual camera 1 into an image as viewed from the viewpoint of a virtual camera. The viewpoint transformation here is performed by use of the inclination angle $\theta$ of the actual camera 1, and thus the depression angle of the virtual camera is 90 degrees (ignoring an error that may be present). That is, in generating the first constituent image, the depression angle of the virtual camera is 90 degrees.

Likewise, the second constituent image is a result of transforming, through viewpoint transformation, the partial image 222 as viewed from the viewpoint of the actual camera 1 into an image as viewed from the viewpoint of a virtual camera. The viewpoint transformation here, in contrast to that mentioned above, is performed by use of an angle $\theta_A$ smaller than the inclination angle $\theta$ of the actual camera 1 (see Equation (4)), and the depression angle of the virtual camera is less than 90 degrees. That is, in generating the second constituent image, the depression angle of the virtual camera is below 90 degrees. For convenience' sake, the virtual cameras involved in generating the first and second constituent images will also be called the first and second virtual cameras, respectively. As $\Delta y_{au}$ increases, the angle $\theta_A$, which follows Equation (4), decreases toward 90 degrees, and as the angle $\theta_A$ in Equation (2) decreases toward 90 degrees, the depression angle of the second virtual camera decreases. When the angle $\theta_A$ equals 90 degrees, the depression angle of the second virtual camera equals the depression angle of the actual camera 1. The first and second virtual cameras are at the same height (H for both).

The image processing device 2 generates and stores image transformation parameters for transforming a camera image into an augmented bird's-eye-view image according to Equations (2) to (4) noted above. The image transformation parameters for transforming a camera image into an augmented bird's-eye-view image are especially called the augmented transformation parameters. The augmented transformation parameters specify the correspondence between the coordinates of pixels on the bird's-eye-view coordinate plane (and hence the augmented bird's-eye-view image) and the coordinates of pixels on the camera coordinate plane (and hence the camera image). The augmented transformation parameters may be stored in a look-up table.

[Operation of Driving Support System, Including Adjustment of Augmented Transformation Parameters]

In a case where it is previously known that the inclination angle and fitting height of the camera 1 will remain completely fixed, simply by properly setting the angle variation rate $\Delta\theta$, the position of the boundary line BL, and the height H of the virtual camera, all mentioned above, beforehand at the stage of design of the driving support system, it is possible to always generate a proper augmented bird's-eye-view image. In contrast, in a case where a user prepares a camera 1 separately from the vehicle 100 and fits the camera 1 on the vehicle 100 to suit the shape etc. of the vehicle 100, the inclination angle etc. of the camera 1 do not remain fixed; accordingly, the augmented transformation parameters need to be adjusted properly to cope with variations in the inclination angle etc. of the camera 1. The driving support system according to the embodiment under discussion is furnished with a function of automatically adjusting the augmented transformation parameters. Now, with focus placed on this function, the configuration and operation of the driving support system will be described.

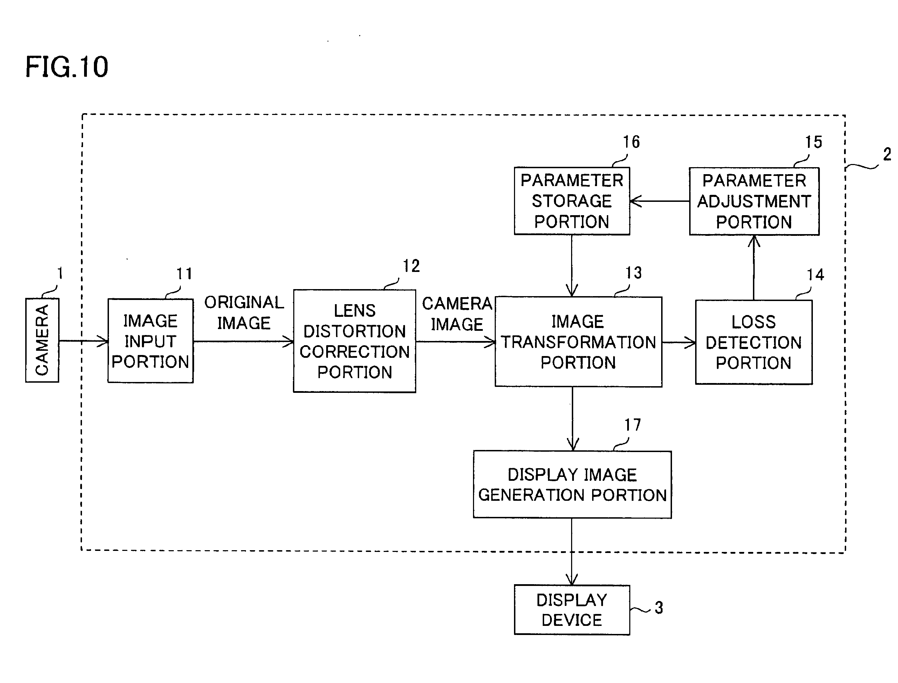

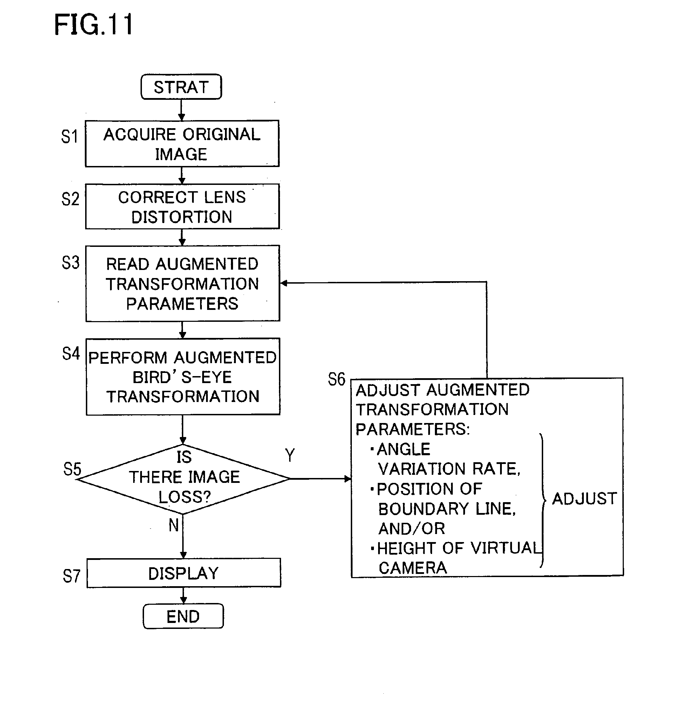

Fig. 10 is a detailed block diagram of the driving support system in Fig. 1, including a functional block diagram of the image processing device 2. The image processing device 2 includes blocks identified by the reference signs 11 to 17. Fig. 11 is a flow chart showing the flow of operation of the driving support system.

In Fig. 10, a parameter storage portion 16 is a memory which stores augmented transformation parameters. The initial values of the augmented transformation parameters stored are determined beforehand, before execution of a sequence of processing at steps S1 through S7 shown in Fig. 11. For example, those initial values are set in a calibration mode. After the camera 1 is fitted on the vehicle 100, when the user operates the driving support system in a predetermined manner, it starts to operate in the calibration mode. In the calibration mode, when the user, by operating an operation portion (not shown), feeds information representing the inclination angle and fitting height of the camera 1 into the driving support system, according to the information, the image processing device 2 determines the values of $\theta$ and h in Equations (2) to (4) noted above. By using the values of $\theta$ and h determined here along with a previously set initial value of the angle variation rate $\Delta\theta$, a previously set initial position of the boundary line BL, and a previously set initial value of the height H of the virtual camera, the image processing device 2 determines the initial values of the augmented transformation parameters according to Equations (2) to (4). The value of the focal length f in Equation (2) noted above is previously known to the image processing device 2. The initial value of the height H of the virtual camera may be determined by the user.

With reference to the flow chart in Fig. 11, the operation of the driving support system will be described. First, at step S1, an image input portion 11 receives input of an original image from the camera 1. Specifically, the image input portion 11 receives the image data of an original image fed from the camera 1, and stores the image data in a frame memory (not shown); in this way, the image input portion 11 acquires an original image. An original image denotes a camera image before undergoing lens distortion correction. For a wider viewing angle, the camera 1 adopts a wide-angle lens, and consequently the original image is distorted. Accordingly, at step S2, a lens distortion correction portion 12 applies lens distortion correction to the original image acquired by the image input portion 11. As a method for lens distortion correction, a well-known one like that disclosed in JP-A-H5-176323 can be used. As mentioned previously, the image obtained by applying lens distortion correction to the original image is simply called the camera image.

Subsequently to step S2, at step S3, an image transformation portion 13 reads the augmented transformation parameters stored in the parameter storage portion 16. As will be discussed later, the augmented transformation parameters can be updated. At step S3, the newest augmented transformation parameters are read. Subsequently, at step S4, according to the augmented transformation parameters thus read, the image transformation portion 13 performs augmented bird's-eye transformation on the camera image fed from the lens distortion correction portion 12, and thereby generates an augmented bird's-eye-view image.

After the processing at step S4, a loss detection portion 14 executes the processing at step S5. The loss detection portion 14 checks whether or not there is (at least partial) image loss in the augmented bird's-eye-view image that is to be generated at step S4. Image loss means that, within the entire region of an augmented bird's-eye-view image over which the entire augmented bird's-eye-view image is supposed to appear, an image-missing region is present. Thus, if an image-missing region is present within the entire region of the augmented bird's-eye-view image, it is judged that there is image loss. An image-missing region denotes a region where no image data based on the image data of a camera image is available. An example of an augmented bird's-eye-view image suffering such image loss is shown in Fig. 16. The solid black area in a top part of Fig. 16 is an image-missing region. Ideally, the image data of all the pixels of an augmented bird's-eye-view image should be generated from the image data of a camera image obtained by shooting by a camera; with improper image transformation parameters, however, part of the pixels in the augmented bird's-eye-view image have no corresponding pixels in the camera image, and this results in image loss.

The target of the checking by the loss detection portion 14 is image loss that occurs within the second image region of the augmented bird's-eye-view image (see Figs. 7 and 16). That is, if image loss occurs, it is assumed to be present within the second image region. Because of the nature of augmented bird's-eye transformation, if image loss results, it occurs starting at the top-end line UL.

If it is judged that there is image loss in the augmented bird's-eye-view image, an advance is made from step S5 to step S6; if it is judged that there is no image loss, an advance is made, instead, to step S7.

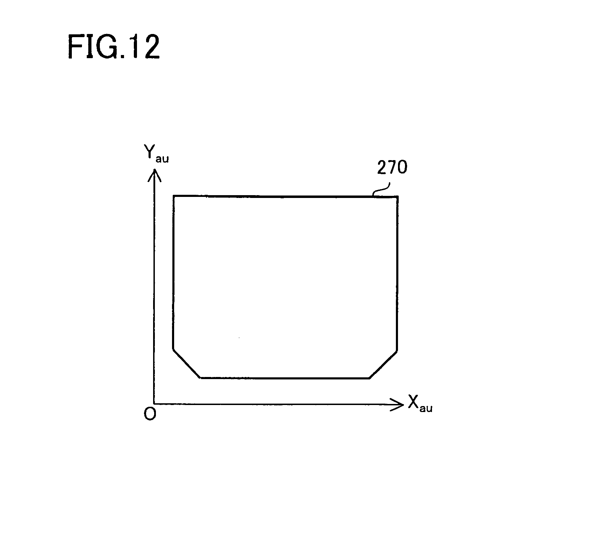

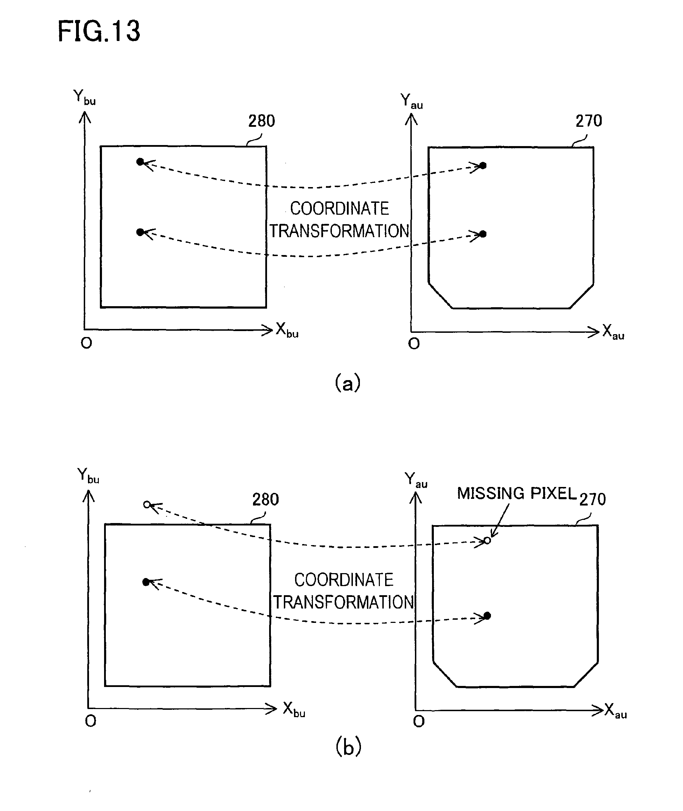

With reference to Fig. 12 and Figs. 13(a) and (b), a supplementary description will be given of the significance of image loss and the method of checking whether or not there is image loss. The coordinates on the bird's-eye-view coordinate plane at which the pixels constituting the augmented bird's-eye-view image are supposed to be located are previously set, and according to those settings, the contour position of the augmented bird's-eye-view image on the bird's-eye-view coordinate plane is previously set. In Fig. 12 and Figs. 13(a) and (b), the frame indicated by the reference sign 270 represents the contour of the entire region of the augmented bird's-eye-view image on the bird's-eye-view coordinate plane. From the group of pixels two-dimensionally arrayed inside the frame 270, the augmented bird's-eye-view image is generated.

According to the augmented transformation parameters read at step S3, the loss detection portion 14 finds the coordinates $(x_{bu}, y_{bu})$ on the camera coordinate plane corresponding to the coordinates $(x_{au}, y_{au})$ of the individual pixels inside the frame 270. If all the coordinates $(x_{bu}, y_{bu})$ thus found are coordinates inside the camera image, that is, if the image data of all the pixels constituting the augmented bird's-eye-view image can be obtained from the image data of the camera image, it is judged that there is no image loss. By contrast, if the coordinates $(x_{bu}, y_{bu})$ found include coordinates outside the camera image, it is judged that there is image loss. Fig. 13(a) shows how coordinate transformation proceeds when there is no image loss, and Fig. 13(b) shows how coordinate transformation proceeds when there is image loss. In Figs. 13(a) and (b), the frame 280 represents the contour of the entire region of the camera image on the camera coordinate plane, and it is only inside the frame 280 that the image data of the camera image is available.

If, at step S5, it is judged that there is image loss, then, at step S6, a parameter adjustment portion 15 adjusts the augmented transformation parameters based on the result of the judgment. An augmented bird's-eye-view image generated from an original image depends on lens distortion correction, the inclination angle θ and fitting height h of the camera 1, the angle variation rate Δθ, the position of the boundary line BL, and the height H of the virtual camera. Of these parameters, lens distortion correction is to be determined according to the characteristics of the lens used in the camera 1, and the inclination angle θ and fitting height h of the camera 1 are to be determined according to how the camera 1 is fitted on the vehicle 100.

Accordingly, the parameter adjustment portion 15 adjusts the angle variation rate Δθ, the position of the boundary line BL, or the height H of the virtual camera in such a way as to reduce the size of (ultimately or ideally, to completely eliminate) an image-missing region within the entire region of the augmented bird's-eye-view image. The size of an image-missing region denotes the image size of the image-missing region. The size of an image-missing region can be represented by the number of pixels constituting it.

Specifically, for example, the angle variation rate $\Delta\theta$ is so adjusted as to be lower after adjustment than before it. Specifically, the angle variation rate $\Delta\theta$ is corrected by being reduced. Reducing the angle variation rate $\Delta\theta$ makes the depression angle of the virtual camera with respect to a given pixel in the second constituent image closer to 90 degrees; this makes the viewing field on the far side from the vehicle narrower, and accordingly makes image loss less likely to occur. The amount by which the angle variation rate $\Delta\theta$ is reduced at a time may be determined beforehand; instead, the amount of reduction may be determined according to the size of the image-missing region. The augmented transformation parameters calculated according to Equations (2) to (4) using the angle variation rate $\Delta\theta$ after adjustment are stored in the parameter storage portion 16 in an updating (overwriting) fashion.

For another example, the position of the boundary line BL is so adjusted as to be closer to the top-end line UL after adjustment than before it. That is, the $Y_{au}$ direction coordinate of the boundary line BL is increased. Changing the position of the boundary line BL such that it is closer to the top-end line LTL reduces the vertical image size of the second constituent image; this makes the viewing field on the far side from the vehicle narrower, and accordingly makes image loss less likely to occur. The amount by which the boundary line BL is moved at a time may be determined beforehand; instead, the amount of movement may be determined according to the size of the image-missing region. The augmented transformation parameters calculated according to Equations (2) to (4) using the position of the boundary line BL after adjustment are stored in the parameter storage portion 16 in an updating (overwriting) fashion.

For yet another example, the height H of the virtual camera is so adjusted as to be lower after adjustment than before it. Reducing the height H of the virtual camera makes the entire viewing field of the augmented bird's-eye-view image narrower, and accordingly makes image loss less likely to occur. The amount by which the height H is reduced at a time may be determined beforehand; instead, the amount of reduction may be determined according to the size of the image-missing region. The augmented transformation parameters calculated according to Equations (2) to (4) using the height H after adjustment are stored in the parameter storage portion 16 in an updating (overwriting) fashion.

For still another example, with the angle variation rate $\Delta\theta$, the position of the boundary line BL, and the height H of the virtual camera taken as a first, a second, and a third adjustment target respectively, two or more of those first to third adjustment targets may be simultaneously adjusted in such a way as to reduce the size of (ultimately or ideally, to completely eliminate) an image-missing region within the entire region of the augmented bird's-eye-view image. Specifically, for example, the angle variation rate $\Delta\theta$ and the position of the boundary line BL may be adjusted simultaneously such that the angle variation rate $\Delta\theta$ is lower and in addition the position of the boundary line BL is closer to the top-end line UL. In this case, the augmented transformation parameters calculated according to Equations (2) to (4) using the angle variation rate $\Delta\theta$ and the position of the boundary line BL after adjustment are stored in the parameter storage portion 16 in an updating (overwriting) fashion.

After the augmented transformation parameters are adjusted at step S6, a return is made to step S3, where the image transformation portion 13 reads the thus updatingly stored augmented transformation parameters. Then, by use of those updatingly stored augmented transformation parameters, the augmented bird's-eye transformation at step S4 and the loss detection processing at step S5 are executed. Thus, the processing around the loop from step S3 through step S6 is executed repeatedly until, at step S5, it is judged that there is no image loss.

If, at step S5, it is judged that there is no image loss, then the image data of the newest augmented bird's-eye-view image with no image loss is fed from the image transformation portion 13 to a display image generation portion 17 (see Fig. 10). Based on the image data of that newest augmented bird's-eye-view image, the display image generation portion 17 generates the image data of a display image, and outputs the image data of the display image to the display device 3. In this way, a display image based on an augmented bird's-eye-view image with no image loss is displayed on the display device 3. The display image is, for example, the augmented bird's-eye-view image itself, or an image obtained by applying arbitrary retouching to the augmented bird's-eye-view image, or an image obtained by adding an arbitrary image to the augmented bird's-eye-view image.

With a driving support system according to this embodiment, even when the inclination angle $\theta$ or fitting height H of the camera 1 varies, the augmented transformation parameters are automatically adjusted to cope with the variation. Thus, it is possible to present a driver with an image with no image loss.

«Modifications and Variations»

Modified examples of, or additional comments on, the embodiment described above will be given below in notes 1 to 4. Unless inconsistent, any part of these notes may be freely combined with any other part.

[Note 1]

In the example described above, an image having undergone lens distortion correction is acted upon by augmented transformation parameters. Instead, image transformation for lens distortion correction may be incorporated in augmented transformation parameters so that an augmented bird's-eye-view image is generated at a stroke (directly) from an original image. In this case, the original image acquired by the image input portion 11 in Fig. 10 is fed to the image transformation portion 13. Moreover, augmented transformation parameters including image transformation for lens distortion correction are previously stored in the parameter storage portion 16; thus, the original image is acted upon by those augmented transformation parameters and thereby an augmented bird's-eye-view image is generated.

Depending on the camera used, lens distortion correction itself may be unnecessary. In a case where lens distortion correction is unnecessary, the lens distortion correction portion 12 is omitted from the image processing device 2 in Fig. 10, and the original image is fed directly to the image transformation portion 13.

[Note 2]

In the example described above, the camera 1 is fitted in a rear part of the vehicle 100 so that the camera 1 has a viewing field in the rear direction of the vehicle 100. Instead, the camera 1 may be fitted in a front or side part of the vehicle 100 so that the camera 1 has a viewing field in the front or side direction of the vehicle 100.

[Note 3]

In the example described above, a display image based on a camera image obtained from a single camera is displayed on the display device 3. Instead, with the vehicle 100 fitted with a plurality of cameras (not shown), a display image may be generated based on a plurality of camera images obtained from those cameras (not shown). In one possible example, the vehicle 100 is fitted with, in addition to the camera 1, one or more other cameras; an image based on camera images from those other cameras is merged with an image (in the example described above, the augmented bird's-eye-view image) based on a camera image of the camera 1, and the resulting merged image is eventually taken as a display image to be fed to the display device 3. The merged image here is, for example, an image of which the viewing field covers 360 degrees around the vehicle 100.

[Note 4]

The image processing device 2 in Fig. 10 can be realized in hardware, or in a combination of hardware and software. In a case where the image processing device 2 is configured on a software basis, a block diagram showing a part realized in software serves as a functional block diagram of that part. All or part of the functions performed by the image processing device 2 may be prepared in the form of a software program so that, when the software program is run on a program executing device, all or part of those functions are performed.

**Claims**

1. An image processing device comprising:

   an image acquisition portion which acquires an input image based on a result of shooting by a camera shooting surroundings of a vehicle;
   an image transformation portion which transforms, through coordinate transformation, the input image into a transformed image including a first constituent image as viewed from a first virtual camera and a second constituent image as viewed from a second virtual camera different from the first virtual camera;
   a parameter storage portion which stores an image transformation parameter for transforming the input image into the transformed image;
   a loss detection portion which checks, by use of the image transformation parameter stored in the parameter storage portion, whether or not, within an entire region of the transformed image obtained from the input image, an image-missing region is present where no image data based on image data of the input image is available; and
   a parameter adjustment portion which, if the image-missing region is judged to be present within the entire region of the transformed image, adjusts the image transformation parameter so as to suppress presence of the image-missing region.

2. The image processing device according to claim 1, wherein, according to the image transformation parameter, the image transformation portion generates the transformed image by dividing the input image into a plurality of partial images including a first partial image in which a subject at a comparatively short distance from the vehicle appears and a second partial image in which a subject at a comparatively long distance from the vehicle appears and then transforming the first and second partial images into the first ad second constituent images respectively.

3. The image processing device according to claim 2, wherein the image transformation parameter before and after adjustment is set such that a depression angle of the second virtual camera is smaller than a depression angle of the first virtual camera and that the depression angle of the second virtual camera decreases at a prescribed angle variation rate away from the first constituent image starting at a boundary line between the first and second constituent images, and
if the image-missing region is judged to be present within the entire region of the transformed image, the parameter adjustment portion adjusts the image transformation parameter by adjusting the angle variation rate in a direction in which a size of the image-missing region decreases.

4. The image processing device according to claim 2, wherein
the image transformation parameter before and after adjustment is set such that a depression angle of the second virtual camera is smaller than a depression angle of the first virtual camera, and
if the image-missing region is judged to be present within the entire region of the transformed image, the parameter adjustment portion adjusts the image transformation parameter by moving a boundary line between the first and second constituent images within the transformed image in a direction in which a size of the image-missing region decreases.

5. The image processing device according to claim 2, wherein, if the image-missing region is judged to be present within the entire region of the transformed image, the parameter adjustment portion adjusts the image transformation parameter by adjusting a height of the first and second virtual cameras in a direction in which a size of the image-missing region decreases.

6. The image processing device according to claim 2, wherein
the image transformation parameter before and after adjustment is set such that a depression angle of the second virtual camera is smaller than a depression angle of the first virtual camera and that the depression angle of the second virtual camera decreases at a prescribed angle variation rate away from the first constituent image starting at a boundary line between the first and second constituent images, and
if the image-missing region is judged to be present within the entire region of the transformed image,
the parameter adjustment portion, taking the angle variation rate, a position of the boundary line on the transformed image, and a height of the first and second virtual cameras as a first, a second, and a third adjustment target respectively, adjusts the image transformation parameter by adjusting one or more of the first to third adjustment targets in a direction in which a size of the image-missing region decreases, and
the parameter adjustment portion repeats the adjustment of the image transformation parameter until the entire region of the transformed image does not include the image-missing region.

7. The image processing device according to any one of claims 1 to 6, wherein
the image transformation parameter defines coordinates before coordinate transformation corresponding to coordinates of individual pixels within the transformed image, and
when the coordinates before coordinate transformation are all coordinates within the input image, the loss detection portion judges that no image-missing region is present within the entire region of the transformed image and, when the coordinates before coordinate transformation include coordinates outside the input image, the loss detection portion judges that the image-missing region is present within the entire region of the transformed image.

8. A driving support system comprising the camera and the image processing device according to any one of claims 1 to 6, wherein an image based on the transformed image obtained at the image transformation portion of the image processing device is outputted to a display device.

9. A vehicle comprising the camera and the image processing device according to any one of claims 1 to 6.

10. An image processing method comprising:

an image acquiring step of acquiring an input image based on a result of shooting by a camera shooting surroundings of a vehicle;

an image transforming step of transforming, through coordinate transformation, the input image into a transformed image including a first constituent image as viewed from a first virtual camera and a second constituent image as viewed from a second virtual camera different from the first virtual camera;

a parameter storing step of storing an image transformation parameter for transforming the input image into the transformed image;

a loss detecting step of checking, by use of the stored image transformation parameter, whether or not, within an entire region of the transformed image obtained from the input image, an image-missing region is present where no image data based on image data of the input image is available; and

a parameter adjusting step of adjusting, if the image-missing region is judged to be present within the entire region of the transformed image, the image transformation parameter so as to suppress presence of the image-missing region.

# FIG.1

```
      1                    2                    3
  ┌──────────┐      ┌──────────────┐      ┌──────────┐
  │          │      │    IMAGE     │      │          │
  │  CAMERA  │─────▶│  PROCESSING  │─────▶│ DISPLAY  │
  │          │      │   DEVICE     │      │  DEVICE  │
  └──────────┘      └──────────────┘      └──────────┘
```

# FIG.2

100        1

FRONT ◀────                              ────▶ REAR

θ'    θ

# FIG.3

DEPRESSION ANGLE

GROUND
(HORIZONTAL PLANE)

FIG.4

FIG.5

## FIG.6

CAMERA IMAGE 200

BIRD'S-EYE-VIEW IMAGE 210

001

001

⬇

⬇

VEHICLE SIDE

VEHICLE SIDE

(a)

(b)

## FIG.7

$Y_{au}$

VERTICAL DIRECTION

AUGMENTED
BIRD'S-EYE-VIEW IMAGE

2ND IMAGE REGION

2ND CONSTITUENT IMAGE

UL

BL

1ST IMAGE REGION

1ST CONSTITUENT IMAGE

LL

⬇

VEHICLE SIDE

O

$X_{au}$

# FIG.8

$Y_{bu}$

CAMERA IMAGE

222

221

$X_{bu}$

O

⇩

VEHICLE SIDE

$Y_{au}$

AUGMENTED
BIRD'S-EYE-VIEW IMAGE

2ND CONSTITUENT
IMAGE

$\Delta y_{au}$

BL

1ST CONSTITUENT
IMAGE

O

$X_{au}$

⇩

VEHICLE SIDE

# FIG.9

AUGMENTED
BIRD'S-EYE-VIEW IMAGE

— 250

001

⇩

VEHICLE SIDE

# FIG.10

# FIG.11

```
              ┌──────────┐
              │  STRAT   │
              └──────────┘
                   │
      ┌────────────▼────────────┐
  S1  │    ACQUIRE ORIGINAL     │
      │         IMAGE           │
      └────────────┬────────────┘
                   │
      ┌────────────▼────────────┐
  S2  │     CORRECT LENS        │
      │      DISTORTION         │
      └────────────┬────────────┘
                   │
      ┌────────────▼────────────┐
  S3  │    READ AUGMENTED       │◄──────────────────┐
      │    TRANSFORMATION       │                   │
      │     PARAMETERS          │                   │
      └────────────┬────────────┘                   │
                   │                                │
      ┌────────────▼────────────┐          S6 ┌─────┴──────────────────────┐
  S4  │  PERFORM AUGMENTED      │             │ ADJUST AUGMENTED           │
      │     BIRD'S-EYE          │             │ TRANSFORMATION             │
      │   TRANSFORMATION        │             │ PARAMETERS:                │
      └────────────┬────────────┘             │   ·ANGLE                   │
                   │                          │     VARIATION RATE,   ┐    │
                 ╱─┴─╲        Y               │   ·POSITION OF        │    │
  S5           ╱  IS  ╲──────────────────────▶│     BOUNDARY LINE,    ├ADJUST│
              ╲ THERE IMAGE ╱                 │     AND/OR            │    │
               ╲ LOSS? ╱                      │   ·HEIGHT OF VIRTUAL  ┘    │
                ╲─┬─╱                         │     CAMERA                 │
                 N│                           └────────────────────────────┘
      ┌───────────▼─────────────┐
  S7  │        DISPLAY          │
      └───────────┬─────────────┘
                  │
             ┌────▼─────┐
             │   END    │
             └──────────┘
```

# FIG.12

# FIG.13

(a)

(b)

# FIG.14

CAMERA IMAGE 900

人 001

⇩

VEHICLE SIDE

(a)

BIRD'S-EYE-VIEW IMAGE 910

人 001

⇩

VEHICLE SIDE

(b)

AUGMENTED
BIRD'S-EYE-VIEW IMAGE 920

2ND IMAGE
REGION

人

921

1ST IMAGE
REGION

001

⇩

VEHICLE SIDE

(c)

24

# FIG.15

VIRTUAL CAMERA

VIRTUAL CAMERA

GROUND

GROUND

(a)                                    (b)

# FIG.16

AUGMENTED
BIRD'S-EYE-VIEW IMAGE

IMAGE-MISSING
REGION

**001**

VEHICLE SIDE

## INTERNATIONAL SEARCH REPORT

| International application No. |
|---|
| PCT/JP2009/051747 |

**A. CLASSIFICATION OF SUBJECT MATTER**
*H04N7/18*(2006.01)i, *B60R1/00*(2006.01)i, *B60R11/02*(2006.01)i, *G06T1/00*(2006.01)i, *G06T17/40*(2006.01)i

According to International Patent Classification (IPC) or to both national classification and IPC

**B. FIELDS SEARCHED**

Minimum documentation searched (classification system followed by classification symbols)
H04N7/18, B60R1/00, B60R11/02, G06T1/00, G06T17/40

Documentation searched other than minimum documentation to the extent that such documents are included in the fields searched
Jitsuyo Shinan Koho        1922-1996    Jitsuyo Shinan Toroku Koho    1996-2009
Kokai Jitsuyo Shinan Koho   1971-2009    Toroku Jitsuyo Shinan Koho    1994-2009

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2006-135797 A  (Matsushita Electric Industrial Co., Ltd.),<br>25 May, 2006 (25.05.06),<br>Par. Nos. [0017] to [0024]; Figs. 1 to 5<br>(Family: none) | 1-2,8-10<br>3-7 |
| Y<br>A | JP 2007-249814 A  (Denso Corp.),<br>27 September, 2007 (27.09.07),<br>Par. Nos. [0036] to [0038], [0044]; Figs. 2 to 5<br>(Family: none) | 1-2,8-10<br>3-7 |

☒ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 12 March, 2009 (12.03.09) | 31 March, 2009 (31.03.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| International application No. |
|---|
| PCT/JP2009/051747 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2002-135765 A  (Matsushita Electric Industrial Co., Ltd.), 10 May, 2002 (10.05.02), Par. Nos. [0329] to [0403]; Figs. 52 to 69 & US 7307655 B1          & EP 1115250 A1 & WO 2000/007373 A1 | 1-10 |
| A | JP 2004-194071 A  (Matsushita Electric Industrial Co., Ltd.), 08 July, 2004 (08.07.04), Par. Nos. [0026] to [0079]; Figs. 10 to 18 (Family: none) | 1-10 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006287892 A

- JP H5176323 A